# EUROPEAN PATENT APPLICATION

(11) **EP 4 318 761 A1**
(43) Date of publication of application: **07.02.2024**
(21) Application number: 23760416.0
(22) Date of filing: 24.02.2023
(51) Int. Cl.: H01M 50/24, H01M 50/211, H01M 50/383, H01M 50/342, H01M 50/375, H01M 50/224, H01M 50/227, H01M 50/502

(54) **BATTERY CELL ASSEMBLY HAVING BLOCKING PLATES, AND BATTERY PACK COMPRISING BATTERY CELL ASSEMBLY**

(30) Priority: 24.02.2022 KR 20220024477
(71) Applicant: LG Energy Solution, Ltd., Seoul 07335 (KR)
(72) Inventor: LEE, Chang Hun, Daejeon 34122 (KR)
(74) Representative: Goddar, Heinz J.
(86) International application number: PCT/KR2023/002660
(87) International publication number: WO 2023/163542

(57) **Abstract**

The present invention relates to a battery cell assembly including a pouch-shaped battery cell, a cell housing configured to receive the pouch-shaped battery cell, a blocking plate located at each of opposite ends of the cell housing along a length direction, and a venting plate configured to discharge gas emitted from the pouch-shaped battery cell, wherein a thermal expansion material is added to an inner surface of the blocking plate, whereby it is possible to completely block transfer of flames generated from the pouch-shaped battery cell and to discharge gas in a direction toward the venting plate.

## Description

### [Technical Field]

This application claims the benefit of priority to Korean Patent Application No. 2022-0024477 filed on February 24, 2022, the disclosure of which is incorporated herein by reference in its entirety.

The present invention relates to a battery cell assembly including a blocking plate and a battery pack including the battery cell assembly. More particularly, the present invention relates to a battery cell assembly capable of preventing transfer of flames generated from one battery cell to another battery cell, securing venting directivity of the battery cell, and achieving cell-to-pack assembly and a battery pack including the battery cell assembly.

### [Background Art]

A lithium secondary battery, which is capable of being charged and discharged, is used as an energy source for small devices, such as mobile devices. With growth of technology, such as capacity increase and safety improvement, lithium secondary batteries are also used as an energy source for medium or large devices, such as electric vehicles and energy storage systems.

Since lithium secondary batteries are used as large-capacity, high-output energy sources, as described above, it is important to ensure safety of the lithium secondary battery.

Heat is generated from the lithium secondary battery during normal charging and discharging, and therefore the temperature of the lithium secondary battery inevitably increases. Such increase in temperature of the lithium secondary battery reduces the performance of a battery cell.

In addition, there is a danger of the lithium secondary battery exploding when the lithium secondary battery overheats. When flames generated as the result of explosion spread to battery cells adjacent thereto, it is difficult to extinguish the fire until the battery cells are completely combusted. When a thermal runaway phenomenon occurs in the battery cell, high-temperature flames higher than an ignition point thereof, sparks, and venting gas may be generated, and the flames, etc. may be transferred to battery cells adjacent thereto, which may eventually lead to explosion of the battery cells.

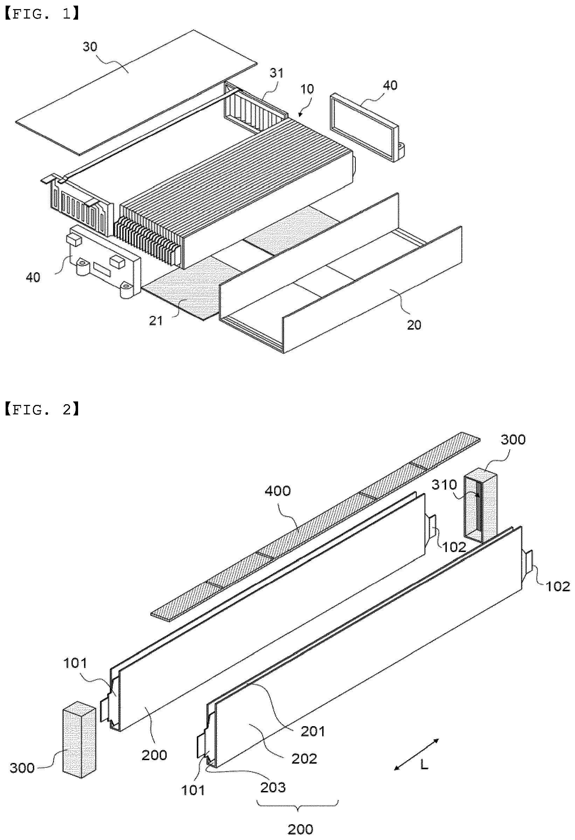

In connection therewith, FIG. 1 is an exploded perspective view of a conventional battery pack.

Referring to FIG. 1, the battery pack includes a battery cell stack 10 configured such that a plurality of battery cells is disposed in tight contact with each other and a pack frame 20 configured to receive the battery cell stack 10. Also included are a thermally conductive resin 21 configured to transfer heat from the battery cell stack 10, a busbar frame assembly 31 configured to electrically connect the battery cells to each other, a top plate 30 located above the battery cell stack 10, the top plate being coupled to the pack frame 20, and an end plate 40 coupled to each of opposite ends of the battery cell stack 10 so as to face the busbar frame assembly 31.

The conventional battery cell stack 10, in which the plurality of battery cells is disposed in tight contact with each other, does not include a structure in which, when fire breaks out in one battery cell, blocks the spread of flames to adjacent battery cells.

In addition, since a function capable of delaying or inhibiting flames after the flames are generated is not provided, the flames inevitably spread to all battery cells.

Therefore, it is important to reduce the temperature of flames and sparks generated in a battery cell and to prevent spread of the flames and sparks, thereby preventing additional damage due to explosion of the battery cell.

In connection therewith, Patent Document 1 discloses a battery cell having a composite sheet extending along the bottom of one surface of the battery cell and joined over the other surface of the battery cell. The composite sheet includes an insulation layer, and the insulation layer is disposed between the battery cell having the composite sheet joined thereto and another battery cell adjacent thereto. When the temperature of one of the battery cells increases, therefore, it is possible to inhibit transfer of heat to the other battery cell adjacent thereto.

Although Patent Document 1 discloses a battery cell having a composite sheet capable of preventing heat transfer between battery cells disposed adjacent to each other, Patent Document 1 does not disclose technology for preventing transfer of the flames, etc. to an adjacent battery cell, when flames, sparks, and gas are emitted in a direction toward an electrode lead of the battery cell.

Therefore, there is a need for technology capable of, when fire breaks out in one of battery cells disposed in tight contact with each other, completely blocking flames, etc. from being transferred to battery cells adjacent thereto and preventing explosion through the provision of a gas discharge structure.

### (Prior Art Document)

(Patent Document 1) International Patent Application Publication No. 2017-159527 (2017.09.21)

### [Disclosure]

### [Technical Problem]

The present invention has been made in view of the above problems, and it is an object of the present invention to provide a battery cell assembly including a structure capable of preventing spread of flames and sparks generated when fire breaks out in a pouch-shaped battery cell and a structure capable of discharging gas generated from the pouch-shaped battery cell.

### [Technical Solution]

A battery cell assembly according to the present invention to accomplish the above object includes a pouch-shaped battery cell, a cell housing configured to receive the pouch-shaped battery cell, a blocking plate located at each of opposite ends of the cell housing along a length direction, and a venting plate configured to discharge gas emitted from the pouch-shaped battery cell, wherein a thermal expansion material is added to an inner surface of the blocking plate.

The thermal expansion material may be expandable graphite.

The thermal expansion material may be located adjacent to an electrode lead of the pouch-shaped battery cell, and the thermal expansion material may be configured to be deformed by expansion to fill a space between the electrode lead and the blocking plate when the temperature of the pouch-shaped battery cell increases.

The cell housing may include a first surface and a second surface located parallel to the bottom of an electrode assembly receiving portion of the pouch-shaped battery cell and a third surface coupled to one end of each of the first surface and the second surface in order to connect the first surface and the second surface to each other.

The venting plate may be coupled to the other side of each of the first surface and the second surface opposite the one side of each of the first surface and the second surface.

The venting plate may have a notch.

The notch may be configured to be broken by the pressure of gas discharged from the pouch-shaped battery cell.

The venting plate may include a through-hole.

The battery cell assembly may include one cell housing or two or more cell housings configured to receive the pouch-shaped battery cell.

The cell housing may include an insulative material and/or a high thermal resistance material.

The cell housing may have a clad structure in which an inner metal and an outer metal are joined to each other, the inner metal being a high rigidity material, and the outer metal being a material that exhibits high thermal conductivity.

The cell housing may include reinforced plastic.

The blocking plate may have a connector mounted thereto, the connector configured to be directly or indirectly connected to an electrode lead.

The present invention provides a battery pack including the battery cell assembly. Specifically, the battery pack according to the present invention may include a cell stack configured such that a plurality of battery cell assemblies is disposed in tight contact with each other and a pack frame configured to receive the cell stack therein, wherein the pack frame may be a quadrangular frame configured to wrap around an outer periphery of the cell stack, and at least one of an upper surface and a lower surface of the cell stack may constitute an outer surface of the battery pack.

In addition, the present invention may provide various combinations of the above constructions.

### [Advantageous Effects]

As is apparent from the above description, in a battery cell assembly according to the present invention, a pouch-shaped battery cell is received in a cell housing configured to wrap the battery cell, the cell housing being made of a high thermal resistance material. As a result, when fire breaks out in the pouch-shaped battery cell, it is possible to guide flames so as to move to opposite ends of the pouch-shaped battery cell in an overall length direction.

In addition, it is possible to prevent flames or sparks from being discharged out of the battery cell assembly. A venting plate capable of discharging gas emitted from the pouch-shaped battery cell is also included, whereby it is possible to prevent explosion of the battery cell assembly.

### [Description of Drawings]

FIG. 1 is an exploded perspective view of a conventional battery pack.
FIG. 2 is an exploded perspective view of a battery cell assembly according to the present invention.
FIG. 3 is a perspective view and a vertical sectional view of the battery cell assembly shown in FIG. 2.
FIG. 4 is a see-through view of a battery cell assembly according to the present invention.
FIG. 5 is a vertical sectional view of a cell housing according to the present invention.
FIG. 6 is a perspective view of a battery pack according to the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but rather means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, embodiments of the present invention will be described in detail with reference to the accompanying drawings.

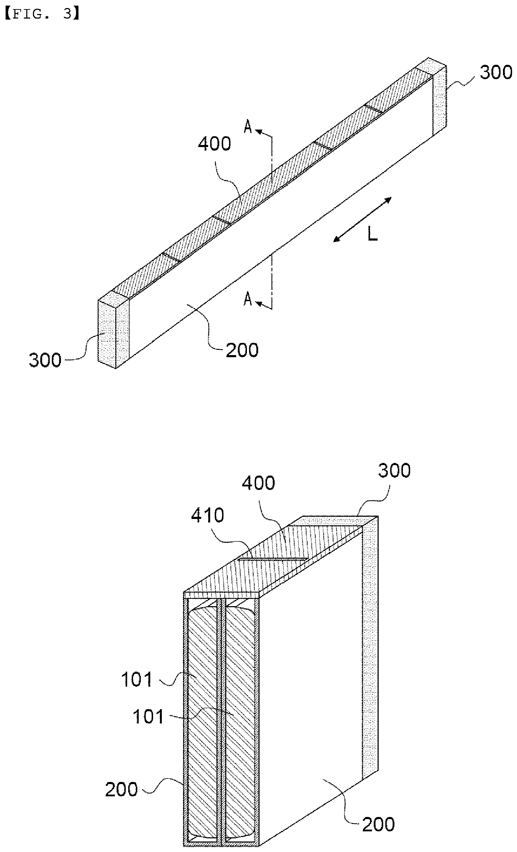

FIG. 2 is an exploded perspective view of a battery cell assembly according to the present invention, and FIG. 3 is a perspective view and a vertical sectional view of the battery cell assembly shown in FIG. 2.

FIG. 3 is a perspective view of the battery cell assembly and a vertical sectional view taken along line A-A.

Referring to FIGS. 2 and 3, the battery cell assembly according to the present invention includes a pouch-shaped battery cell 101, a cell housing 200 configured to receive the pouch-shaped battery cell 101, a blocking plate 300 located at each of opposite ends of the cell housing 200 in an overall length direction L, and a venting plate 400 configured to discharge gas emitted from the pouch-shaped battery cell 101. A thermal expansion material 310 is added to an inner surface of the blocking plate 300. When heat generated from the pouch-shaped battery cell as the result of increase in temperature of the pouch-shaped battery cell is transferred to the thermal expansion material 310, the volume of the thermal expansion material 310 is abruptly increased.

The thermal expansion material 310 is a material that is flame retardant and expands up to several hundred times of the original volume at a temperature of 180°C to 220°C when fire breaks out. For example, the thermal expansion material may be expandable graphite. Since the expandable graphite forms a barrier that prevents oxygen from reaching flames while expanding, the expandable graphite may perform a physical fire extinguishing action.

The thermal expansion material 310 is located adjacent to an electrode lead 102 of the pouch-shaped battery cell 101, and is deformed by expansion to fill a space between the electrode lead 102 and the blocking plate 300 when the temperature of the pouch-shaped battery cell 101 increases.

After expanding, the thermal expansion material 310 may prevent flames emitted from the pouch-shaped battery cell from being discharged out of the blocking plate 300.

In addition, even when the blocking plate 300 is coupled to the end of each of a plurality of pouch-shaped battery cells, it is possible to prevent flames of any one battery cell that is ignited from being transferred to other battery cells that are not ignited in the blocking plate, since the thermal expansion material has the property of abruptly expanding when temperature increases.

The cell housing 200 is made of an insulative material, a high thermal resistance material, or a insulative and high thermal resistance material. One pouch-shaped battery cell 101 is disposed in the cell housing 200. Even though flames are emitted from the pouch-shaped battery cell 101 in the cell housing 200 due to thermal runaway caused by abnormal use of the pouch-shaped battery cell, therefore, spread of the flames is blocked by the cell housing 200, whereby it is possible to prevent transfer of the flames out of the cell housing 200.

The cell housing 200 includes a first surface 201 and a second surface 202 located parallel to the bottom of an electrode assembly receiving portion of the pouch-shaped battery cell 101 and a third surface 203 coupled to one side of each of the first surface 201 and the second surface 202 in order to connect the first surface and the second surface to each other. That is, the cell housing 200 is configured in a U shape that wraps the outer surface of the pouch-shaped battery cell 101 in the overall length direction L.

In general, a sealed portion of the pouch-shaped battery cell, from which the electrode lead protrudes, is a region at which venting easily occurs due to weak coupling. Consequently, the blocking plate including the thermal expansion material may be disposed at the part of the pouch-shaped battery cell adjacent to the electrode lead, whereby it is possible to prevent spread of flames or sparks to other battery cells.

Meanwhile, when the cell housing 200 is made of an insulative material, no short circuit occurs even though the cell housing comes into contact with the electrode lead of the pouch-shaped battery cell disposed in the cell housing. When a cell housing made of an insulative material is used, therefore, a separate member for ensuring insulation between an electrical connection member or a connector and the pouch-shaped battery cell is not necessary. Consequently, it is possible to reduce space and expense necessary to provide an insulation structure.

In FIGS. 2 and 3, a structure in which two cell housings 200, in each of which the pouch-shaped battery cell 101 is received, are disposed adjacent to each other, one blocking plate 300 is located at each of opposite ends of the two cell housings 200 in the overall length direction L, and the venting plate 400 is coupled to upper parts of the two cell housings 200 is shown.

Unlike this, one blocking plate 300 may be located at each of opposite ends of one cell housing 200, in which the pouch-shaped battery cell 101 is received, in the overall length direction, and the venting plate 400 may be coupled to the upper part of the cell housing.

Alternatively, the battery cell assembly may include three or more cell housings 200, in each of which the pouch-shaped battery cell 101 is received.

In the present invention, as described above, the battery cell assembly may be configured to have a structure in which one or more cell housings are arranged in tight contact with each other, the blocking plate is coupled to each of opposite ends of the cell housings, and the venting plate is coupled to the upper parts of the cell housings.

The venting plate 400 is coupled to the other side of each of the first surface 201 and the second surface 202 of the cell housing 200 opposite the one side of each of the first surface and the second surface to which the third surface 203 is coupled. That is, the venting plate 400 may be added to an outer surface of the pouch-shaped battery cell 101 to which the cell housing 200 is not added so as to be coupled to the cell housing 200.

The pouch-shaped battery cell 101 is received in a space defined by the cell housing 200, the blocking plate 300, and the venting plate 400. When the pressure in the space defined by the cell housing 200, the blocking plate 300, and the venting plate 400 increases as the result of gas being discharged from the pouch-shaped battery cell 101, the gas may be discharged in a direction toward the venting plate 400.

A notch 410 is formed in the venting plate 400. The notch 410 may be broken by the pressure of gas discharged from the pouch-shaped battery cell 101, whereby a gas discharge path may be formed.

In the battery cell assembly according to the present invention, as described above, the venting plate having the notch formed therein is provided at one side surface of the pouch-shaped battery cell in order to prevent gas from not being easily discharged from the pouch-shaped battery cell due to the addition of the cell housing, which is made of a high strength material. Consequently, it is possible to guide gas such that the gas can be discharged in a specific direction.

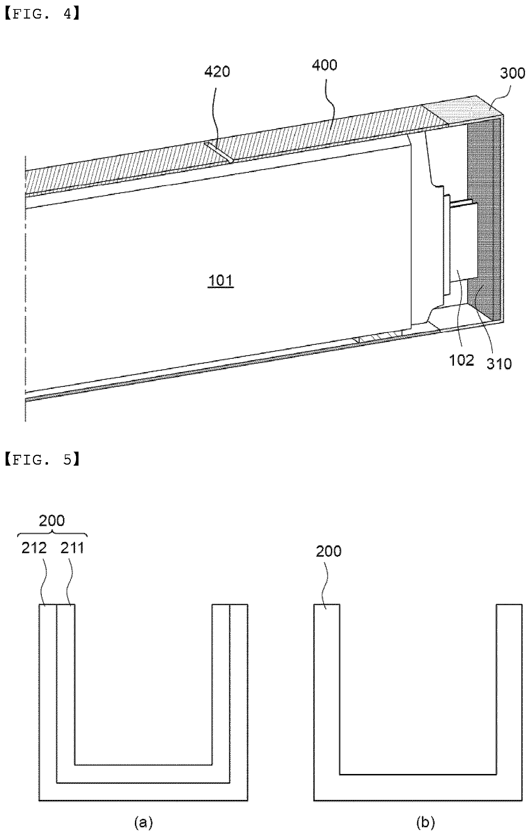

FIG. 4 is a see-through view of a battery cell assembly according to the present invention.

Referring to FIG. 4, the battery cell assembly shown in FIG. 4 is identical in construction to the battery cell assembly shown in FIGS. 2 and 3 except that a through-hole 420 is formed in the venting plate 400.

When the through-hole 420 is formed, as described above, it is possible to discharge gas from the cell housing, whereby it is possible to reduce increase in internal pressure of the cell housing, to delay rupture of the venting plate 400, or to prevent rupture of the venting plate.

In a concrete example, a connector (not shown) configured to be directly or indirectly connected to the electrode lead 102 may be mounted to the blocking plate 300.

The connector may be disposed so as to extend through the blocking plate 300. The inside of the connector may be connected to the electrode lead 102, and the outside of the connector may serve as a low voltage (LV) connector or a high voltage (HV) connector.

In the above description, the electrode lead and the connector being directly connected to each other means that the connector and the electrode lead are directly connected to each other without any member therebetween. Moreover, the electrode lead and the connector being indirectly connected to each other means that the connector and the electrode lead are connected to each other in a state in which at least one member, such as at least one busbar, is further disposed therebetween.

For the other constructions, a description of the battery cell assembly shown in FIGS. 2 and 3 may be equally applied to a description of the battery cell assembly shown in FIG. 4.

FIG. 5 is a vertical sectional view of a cell housing according to the present invention.

Referring to (a) of FIG. 5, the cell housing 200 may have a clad structure in which an inner metal 211 and an outer metal 212 are joined to each other. The inner metal 211 may be a material that exhibits high flame resistance, high acid resistance, high corrosion resistance, and high rigidity, such as stainless steel, or a material that exhibits high thermal conductivity, high heat preservation, and high thermal efficiency, such as MICA or a special coating. Aluminum, which is easily shapeable, may be used as the outer metal 212.

Referring to (b) of FIG. 5, the cell housing 200 may be made of a single material, such as reinforced plastic, which has higher strength than iron. For example, fiber glass reinforced plastic may be used. Fiber glass reinforced plastic has advantages of higher strength than iron, lighter weight than aluminum, and no rust.

In the battery cell assembly according to the present invention, as described above, the cell housing made of the insulative and/or high thermal resistance material is used. When fire breaks out in the pouch-shaped battery cell received in the cell housing, therefore, it is possible to completely block flames or sparks from being transferred out of the cell housing.

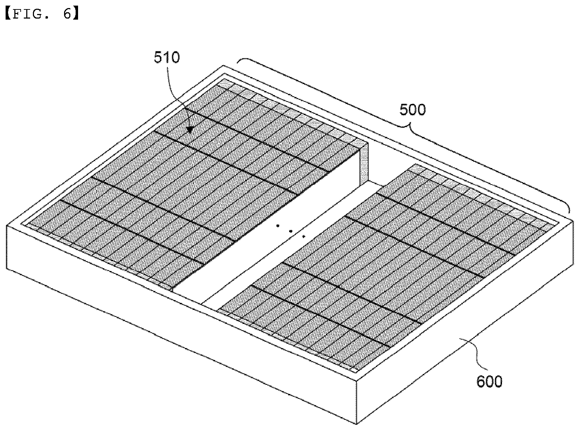

FIG. 6 is a perspective view of a battery pack according to the present invention.

Referring to FIG. 6, the battery pack according to the present invention includes a cell stack 500 configured such that a plurality of battery cell assemblies 510 are disposed in tight contact with each other, and a pack frame 600 is configured to receive the cell stack 500 therein. The pack frame 600 is a quadrangular frame configured to wrap the outer periphery of the cell stack 500.

Optionally, the pack frame 600 may include an outer surface configured to wrap at least one of an upper surface and a lower surface of the cell stack 500, and at least one of the upper surface and the lower surface of the cell stack 500 may be exposed to the outside without being covered by the pack frame 600.

That is, at least one of the upper surface and the lower surface of the cell stack 500 constitutes an outer surface of the battery pack. Consequently, the battery pack may be constituted by only the battery cell assemblies 510 and the pack frame 600 without separate members, such as a top plate and an end plate, which are provided in a conventional battery pack.

Consequently, it is possible to manufacture a simple battery pack having a cell-to-pack structure in which the battery pack can be directly manufactured using battery cell assemblies.

Unlike what is shown in FIG. 6, the pack frame may include a coupling portion extending outwards or inwards, and the battery pack may be directly mounted to a device by fastening a bolt to the coupling portion.

Those skilled in the art to which the present invention pertains will appreciate that various applications and modifications are possible within the category of the present invention based on the above description.

### (Description of Reference Numerals)

10, 500: Cell stacks
20: Pack frame
21: Thermally conductive resin
30: Top plate
31: Busbar frame assembly
40: End plate
101: Pouch-shaped battery cell
102: Electrode lead
200: Cell housing
201: First surface
202: Second surface
203: Third surface
211: Inner metal
212: Outer metal
300: Blocking plate
310: Thermal expansion material
400: Venting plate
410: Notch
420: Through-hole
500: Cell stack
510: Battery cell assembly
600: Pack frame

## Claims

1. A battery cell assembly comprising:
a pouch-shaped battery cell;
a cell housing configured to receive the pouch-shaped battery cell;
a blocking plate located at each of opposite ends of the cell housing along a length direction; and
a venting plate configured to discharge gas emitted from the pouch-shaped battery cell,
wherein a thermal expansion material is added to an inner surface of the blocking plate.

2. The battery cell assembly according to claim 1, wherein the thermal expansion material is expandable graphite.

3. The battery cell assembly according to claim 1, wherein
the thermal expansion material is located adjacent to an electrode lead of the pouch-shaped battery cell, and
the thermal expansion material is configured to be deformed by expansion to fill a space between the electrode lead and the blocking plate when temperature of the pouch-shaped battery cell increases.

4. The battery cell assembly according to claim 1, wherein the cell housing comprises:
a first surface and a second surface located parallel to a bottom of an electrode assembly receiving portion of the pouch-shaped battery cell; and
a third surface coupled to one end of each of the first surface and the second surface in order to connect the first surface and the second surface to each other.

5. The battery cell assembly according to claim 4, wherein the venting plate is coupled to the other side of each of the first surface and the second surface opposite the one side of each of the first surface and the second surface.

6. The battery cell assembly according to claim 1, wherein the venting plate has a notch.

7. The battery cell assembly according to claim 6, wherein the notch is configured to be broken by pressure of gas discharged from the pouch-shaped battery cell.

8. The battery cell assembly according to claim 1, wherein the venting plate comprises a through-hole.

9. The battery cell assembly according to claim 1, wherein the battery cell assembly comprises one cell housing or two or more cell housings configured to receive the pouch-shaped battery cell.

10. The battery cell assembly according to claim 1, wherein the cell housing comprises an insulative material and/or a high thermal resistance material.

11. The battery cell assembly according to claim 10, wherein
the cell housing has a clad structure in which an inner metal and an outer metal are joined to each other,
the inner metal being a high rigidity material, and
the outer metal being a material that exhibits high thermal conductivity.

12. The battery cell assembly according to claim 10, wherein the cell housing comprises reinforced plastic.

13. The battery cell assembly according to claim 1, wherein the blocking plate has a connector mounted thereto, the connector configured to be directly or indirectly connected to an electrode lead.

14. A battery pack comprising the battery cell assembly according to any one of claims 1 to 13, the battery pack comprising:
a cell stack configured such that a plurality of battery cell assemblies is disposed in tight contact with each other; and
a pack frame configured to receive the cell stack therein, wherein
the pack frame is a quadrangular frame configured to wrap around an outer periphery of the cell stack, and
at least one of an upper surface and a lower surface of the cell stack constitutes an outer surface of the battery pack.
